(19) Europäisches Patentamt
European Patent Office
Office européen des brevets

(11) **EP 4 585 912 B1**

(12) **EUROPEAN PATENT SPECIFICATION**

(45) Date of publication and mention
of the grant of the patent:
**29.07.2026 Bulletin 2026/31**

(21) Application number: **23862997.6**

(22) Date of filing: **28.08.2023**

(51) International Patent Classification (IPC):
**G06V 10/46** (2022.01)    **G01N 23/046** (2018.01)

(52) Cooperative Patent Classification (CPC):
**G06V 10/478; G01N 23/046**

(86) International application number:
**PCT/JP2023/030994**

(87) International publication number:
**WO 2024/053458 (14.03.2024 Gazette 2024/11)**

(54) **METHOD FOR ANALYZING ORIENTATION STATE OF FILLER IN RESIN MOLDED PRODUCT**

VERFAHREN ZUR ANALYSE DES ORIENTIERUNGSZUSTANDS VON FÜLLSTOFFEN IN EINEM HARZGEFORMTEN PRODUKT

PROCÉDÉ D'ANALYSE DE L'ÉTAT D'ORIENTATION D'UNE CHARGE DANS UN PRODUIT MOULÉ EN RÉSINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.09.2022 JP 2022143601**

(43) Date of publication of application:
**16.07.2025 Bulletin 2025/29**

(73) Proprietor: **Daicel Corporation
Osaka-shi, Osaka 530-0011 (JP)**

(72) Inventor: **AOKI, Gen
Fuji-shi, Shizuoka 416-8533 (JP)**

(74) Representative: **Maiwald GmbH
Elisenhof
Elisenstraße 3
80335 München (DE)**

(56) References cited:
**WO-A1-2019/159792      JP-A- 2008 122 178
JP-A- 2017 210 616      JP-A- 2022 052 102**

JP-A- H07 304 056      JP-A- H10 300 690
US-B1- 9 919 465

• SHENG JIANG ET AL.: "Three-dimensional fabric orientation visualisation technique for distributed fractures using X-ray computed tomography", vol. 142, 1 June 2021 (2021-06-01), United Kingdom, pages 1 - 17, XP093294230, ISSN: 1365-1609, Retrieved from the Internet <URL:https://www.sciencedirect.com/science/article/pii/S1365160921001416?via=ihub> [retrieved on 20250709], DOI: 10.1016/j.ijrmms.2021.104756

• NISHIKAWA, YUKIHIRO, KOMASU, YUICHIRO, TAKAHASHI, MASAOKI: "Evaluation of Orientation of Fibers in Polymeric Composites studied by X-ray Microtomography", PROCEEDINGS OF 57TH RHEOLOGY SYMPOSIUM; OCTOBER 5-7, 2009, 5 October 2009 (2009-10-05), JP, pages 2 - 3, XP009558368

**Description**

[Technical Field]

The present invention relates to a method for analyzing the orientation state of a filler in a resin molded product.

[Background Art]

Conventionally, for the purpose of shortening the design period of a resin product (resin molded product) or reducing the prototyping cost, an attempt to substitute a mechanical strength test or the like of a variety of resin products with a numerical analysis method has been incorporated in the design sites of diverse resin products.

In the case of not using the numerical analysis method, there is a problem as follows: in a case where a mechanical strength test is a test accompanying the destruction of a resin product or a prototype thereof, there is a need to prepare as many prototypes as the number of times of testing, there is a case where it is not possible to redo the test due to a time constraint in designing a resin product, or the like.

Therefore, in the design sites of resin products, substitution of a mechanical strength test or the like of a resin product with a numerical analysis method has become a critical issue.

Particularly, for resin products produced using a resin composition containing a filler, such as a fibrous filler, there is a need to predict the strength in consideration of the orientation of the filler, such as a fibrous filler. However, in a case where it is not possible to sufficiently predict the strength in consideration of the orientation of the filler, it is difficult to distinguish whether the cause thereof lies in the prediction accuracy of the fiber orientation state or the accuracy of a method for predicting physical property values from the fiber orientation. Therefore, there is a concern of the accuracy of prediction by a numerical analysis.

Examples of a method for analyzing the orientation of a filler include methods in which X-ray CT is used as described in Patent Literature 1 and 2. Examples thereof also include a method in which, on the contrary, X-ray CT is not used, a cross section is physically formed by cutting or the like and the orientation angle and the degree of orientation are calculated from an image captured with SEM or the like as described in Non Patent Literature 1.

[Citation List]

[Patent Literature]

[Patent Literature 1] Japanese Patent Laid-Open No. 2012-002547
[Patent Literature 2] Japanese Patent No. 5844921

[Non Patent Literature]

[Non Patent Literature 1] Fiber orientation in injection-molded composites: A comparison of theory and experiment RANDY S. BAY Et al, POLYMER COMPOSITES, AUGUST 1992, Vol. 13, No. 4.

The document: SHENG JIANG ET AL.: "Three-dimensional fabric orientation visualisation technique for distributed fractures using X-ray computed tomography",INTERNATIONAL JOURNAL OF ROCK MECHANICS AND MINING SCIENCES,vol. 142 1 June 2021 (2021-06-01), pages 1-17,United Kingdom ISSN: 1365-1609, DOI: 10.1016/j.ijrmms.2021.104756, discloses that fabric orientation properties can be quantitatively recovered by three-dimensional Fourier transform.

[Summary of Invention]

[Technical Problem]

The method described in Patent Literature 1 has a problem in that an excessive amount of time is required at the time of performing a binarization process and obtaining the orientation angle and the degree of orientation, it is difficult to set the threshold at the time of binarizing an image, and the orientation angle and the degree of orientation vary depending on a method for measuring the image and a method for setting the threshold. Therefore, as a numerical analysis method, verification of the analysis accuracy of the fiber orientation that is obtained with Moldflow Insight manufactured by Autodesk Inc. or the like has become difficult.

In addition, the method described in Patent Literature 2 has a problem in that an excessive amount of time is required at the time of fitting into a virtual cylinder, and there is thus a concern of the accuracy of calculation of the degree of orientation and the orientation angle of a state where a fiber is curved.

Furthermore, the method described in Non Patent Literature 1 has a problem in that an excessive amount of time is required to produce a sample for cross-sectional observation, there is a need to widen the definition in the cutting direction, and the resolution in the cutting direction is poor.

The present invention has been made in consideration of the conventional problems described above, and an object of the present invention is to provide an analysis method by which the orientation state of a filler, such as a fibrous filler, in a resin molded product containing the filler can be easily analyzed with a practical accuracy.

[Solution to Problem]

As a result of intensive studies for achieving the object, the present inventors found that the orientation tendency of a filler in a resin molded product can be analyzed with practical accuracy and processing time from an image of the resin molded product obtained by X-ray CT without image processing and data processing, for which a long period of time is required, and completed the present invention.

One aspect of the present invention to accomplish the above object is as follows.

(1) A method for analyzing an orientation state of a filler in a resin molded product, the method comprising:

a slice image acquisition step of acquiring a slice image in a predetermined direction regarding at least a part of a resin molded product obtained by molding a resin composition containing a filler in a predetermined proportion;
a power spectrum image acquisition step of selecting, from the slice image, one or more slice images and performing Fourier transform on the selected slice images, thereby acquiring a power spectrum image; and
an orientation state analysis step of analyzing and digitalizing an orientation state of the filler in the power spectrum image based on the power spectrum image.

(2) The method for analyzing an orientation state of a filler in a resin molded product according to (1), wherein in the orientation state analysis step, a two-dimensional tensor T indicated by the following mathematical formula 4 is obtained from brightness of a pixel at any position in the power spectrum image using the following mathematical formula 1, the following mathematical formula 2, and the following mathematical formula 3.

[Formula 1]

$$XX = \iint x^2 \left| \left( \sqrt{x^2+y^2} \right) F(x,y) \right|^2 dx\,dy \quad \cdots \text{Mathematical formula 1}$$

$$YY = \iint y^2 \left| \left( \sqrt{x^2+y^2} \right) F(x,y) \right|^2 dx\,dy \quad \cdots \text{Mathematical formula 2}$$

$$XY = \iint xy \left| \left( \sqrt{x^2+y^2} \right) F(x,y) \right|^2 dx\,dy \quad \cdots \text{Mathematical formula 3}$$

$$T = \begin{bmatrix} XX & XY \\ XY & YY \end{bmatrix} \quad \cdots \text{Mathematical formula 4}$$

[in the mathematical formulae 1 to 4, F(x, y) indicates a density of a pixel at an X position and a Y position in the image, and x and y indicate positions of the pixel in a horizontal direction and a vertical direction, respectively].

(3) The method for analyzing an orientation state of a filler in a resin molded product according to (2), wherein in the orientation state analysis step, eigenvalues a and b and an eigenvector are obtained from the two-dimensional tensor T, a degree of orientation is obtained from the eigenvalues a and b, and an orientation angle is obtained from the eigenvector.

(4) The method for analyzing an orientation state of a filler in a resin molded product according to (3), wherein in the orientation state analysis step, a degree of relative orientation indicated by the following mathematical formula 5 is obtained from two components of the eigenvalues a and b.

$$\text{degree of relative orientation} = a/b \cdots \text{Mathematical Formula 5}$$

[in the mathematical formula 5, the eigenvalues a and b satisfy $a \geq b$].

(5) The method for analyzing an orientation state of a filler in a resin molded product according to (3), wherein an X-direction component intensity DX indicated by the following mathematical formula 6 and a Y-direction component intensity DY indicated by the following mathematical formula 7, for which the components XX and YY in the mathematical formula 4 are used, are obtained.

[Formula 2]

$$DX = \frac{XX}{XX + YY} \quad \cdots \text{Mathematical formula 6}$$

$$DY = \frac{YY}{XX + YY} \quad \cdots \text{Mathematical formula 7}$$

Advantageous Effects of Invention

According to the present invention, it is possible to provide an analysis method by which the orientation state of a filler, such as a fibrous filler, in a resin molded product containing the filler can be easily analyzed within a short period of time with a practical accuracy.

Brief Description of Drawing

[Fig. 1] Fig. 1 is a schematic view of an X-ray CT measuring device.
[Fig. 2] Fig. 2 is a view showing an entire image of a resin molded product captured with an X-ray CT device.
[Fig. 3] Fig. 3 is a view showing a slice image of the resin molded product captured with the X-ray CT device.
[Fig. 4] Fig. 4(a) is a power spectrum image obtained by performing Fourier transform on the image shown in Fig. 3, and Fig. 4(b) is a view showing a state where the power spectrum image has been disposed in coordinates.
[Fig. 5] Fig. 5(a) is the power spectrum image obtained by performing Fourier transform on the image shown in Fig. 3 and Fig. 5(b) is a view describing a method for deriving an orientation angle.
[Fig. 6] Fig. 6 is a perspective view showing the shape of a resin molded product used in an example.
[Fig. 7] Fig. 7 is a view showing an example of eigenvalues (a and b), the orientation angle, and a principal eigenvector in the power spectrum image shown in Fig. 5.
[Fig. 8] Fig. 8 is a graph showing an example of a distribution of the orientation angles of a fibrous filler relative to a position of the resin molded product in a thickness direction.
[Fig. 9] Fig. 9 is a graph showing an example of the distribution of the degrees of orientation of the fibrous filler relative to the position of the resin molded product in the thickness direction.

[Fig. 10] Fig. 10 is a graph showing Y-direction component intensity distributions relative to relative positions of the resin molded products in the thickness direction.

[Fig. 11] Fig. 11 is a graph showing a correlation between a Y-direction component intensity average value and a tensile strength.

[Fig. 12] Fig. 12 is a view obtained by performing binarization on the image shown in Fig. 3.

[Fig. 13] Fig. 13 is a view showing a power spectrum image obtained by performing Fourier transform on the image shown in Fig. 12.

[Fig. 14] Fig. 14 is a graph showing the distribution of the orientation angles of the fibrous filler relative to the position of the resin molded product in the thickness direction in a case where an X-ray CT image has been binarized.

[Fig. 15] Fig. 15 is a graph showing the distribution of the degrees of orientation of the fibrous filler relative to the position of the resin molded product in the thickness direction in a case where an X-ray CT image has been binarized.

[Description of Embodiments]

A method for analyzing an orientation state of a filler in a resin molded product of the present embodiment (hereinafter, abbreviated as "the analysis method of the present embodiment" in some cases) has a slice image acquisition step of acquiring a slice image in a predetermined direction regarding at least a part of a resin molded product obtained by molding a resin composition containing a filler in a predetermined proportion, a power spectrum image acquisition step of selecting, from the slice image, one or more slice images and performing Fourier transform on the selected slice images, thereby acquiring a power spectrum image, and an orientation state analysis step of analyzing and digitalizing an orientation state of the filler in the power spectrum image based on the power spectrum image.

Prior to describing the analysis method of the present embodiment, the resin molded product, which is an analysis subject, will be described first. The resin molded product is obtained by molding a resin composition containing a resin material and a filler and includes a resin part and a filler part. Hereinafter, the resin material that is contained in the resin part and the filler that is contained in the filler part will be described.

[Resin Material]

In the analysis method of the present embodiment, it is possible to produce the resin molded product, which is an analysis subject, using a variety of well-known conventional resin materials. In addition, a resin mixture obtained by blending multiple resins is also included in the resin materials.

[Filler]

As described above, the resin molded product contains a filler in a predetermined proportion. As the kind of the filler, an inorganic filler that provides a clearly visible boundary between the resin and the filler and has a low X-ray transmittance is preferable. Examples of well-known conventional inorganic fillers include fibrous fillers, powder-like fillers, plate-like fillers, and the like.

Examples of preferable fibrous fillers include glass fibers, asbestos fibers, silica fibers, silica/alumina fibers, alumina fibers, zirconia fibers, boron nitride fibers, silicon nitride fibers, boron fibers, potassium titanate fibers, and furthermore, inorganic fibrous substances such as fibrous substances of a metal such as stainless steel, aluminum, titanium, copper, brass, or the like.

In addition, examples of the powder-like fillers include silica, quartz powders, glass beads, milled glass fibers, glass balloons, glass powders, calcium silicate, aluminum silicate, kaolin, talc, clay, diatomaceous earth, silicates such as wollastonite, iron oxide, titanium oxide, zinc oxide, antimony trioxide, metal oxides such as alumina, metal carbonates such as calcium carbonate and magnesium carbonate, metal sulfates such as calcium sulfate and barium sulfate, other ferrites, silicon carbide, silicon nitride, boron nitride, a variety of metal powders, and the like.

In addition, examples of the plate-like fillers include mica, glass flakes, a variety of metal foils, and the like.

The resin composition also includes a resin composition imparted with desired characteristics by adding additives such as a nucleating agent, a colorant, an antioxidant, a stabilizer, a plasticizer, a lubricant, a mold release agent, and a flame retardant.

In the present embodiment, the resin molded product can be obtained by a well-known conventional molding method. Examples of the well-known conventional molding method include a variety of molding methods such as compression molding, transfer molding, injection molding, extrusion molding, and blow molding.

Among these, in the resin molded product containing the fibrous filler, anisotropy of physical properties or the like is large due to the orientation state of the filler. As a result, it is not possible to use an analysis result for the evaluation of the physical properties as long as the orientation of the fibrous filler is analyzed with a higher accuracy. Therefore, in conventional methods, in a case where a resin molded product containing a fibrous filler is an analysis subject, it takes more time and effort to increase the analysis accuracy. On the other hand, in the analysis method of the present embodiment, even when the resin molded product containing the fibrous filler is a subject, it does not take more effort or the like to increase the analysis accuracy, and the tendency of the orientation state of the filler can be appropriately analyzed. Therefore, it is possible to use the analysis result for the prediction of the physical properties even when the resin molded product containing the fibrous filler is a subject. In a case where, among the above-listed fibrous fillers, glass fibers are contained, it is not possible to use the analysis result for the prediction of the physical properties as long as, particularly, the orientation state of the filler is analyzed with a higher accuracy. In the analysis method of the present embodiment, even when the resin molded product containing the glass fibers is a subject, it does not take more effort or the like to increase the analysis accuracy, and the tendency of the orientation state of the filler can be appropriately analyzed.

In addition, in a case where the content of the filler is large, the filler intricately overlaps with each other and significantly interferes with each other in a resin product, consequently, in conventional methods, the analysis accuracy significantly decreases, and it is not possible to use the analysis result for the prediction of the physical properties. On the other hand, in the analysis method of the present embodiment, even when the content of the filler is large, the tendency of the orientation state of the filler can be easily and appropriately analyzed, and it is thus possible to use the analysis result for the prediction of the physical properties even when the resin molded product having a large content of the filler is the subject.

[Other Components]

In the present embodiment, the resin composition also includes a resin composition imparted with desired characteristics by adding additives such as a nucleating agent, a colorant, an antioxidant, a stabilizer, a plasticizer, a lubricant, a mold release agent, and a flame retardant.

[Method for Manufacturing Resin Molded Product]

The resin molded product according to the present embodiment can be obtained by a well-known conventional molding method. Examples of the well-known conventional molding method include a variety of molding methods such as compression molding, transfer molding, injection molding, extrusion molding, and blow molding.

<Method for Analyzing Orientation State of Filler in Resin Molded Product>

The analysis method of the present embodiment has a slice image acquisition step, a power spectrum image acquisition step, and an orientation state analysis step. Hereinafter, each step of the analysis method of the present embodiment will be described in more detail.

[Slice Image Acquisition Step]

The slice image acquisition step is a step of acquiring one or more slice images at a predetermined interval in a predetermined direction regarding at least a part of the resin molded product obtained by molding the resin composition containing the filler in a predetermined proportion.

One or more slice images are acquired at a predetermined interval in a predetermined direction regarding at least a part of the resin molded product. "At least a part" means that the analysis subject of the orientation state of the filler may be all of the obtained resin molded product or the analysis subject of the orientation state of the filler may be a part of the resin molded product. For example, in a case where the orientation state in the resin molded product is uniform, once the orientation state only in a part is analyzed, the orientation states in other parts can be regarded as the same as that in the analyzed part. In addition, in a case where a weak part, such as a welded part, is already known and the physical properties only in that part are intended to be evaluated, the purpose can be achieved by acquiring one or more slice images of the part without acquiring a slice image of all. According to the analysis method of the present embodiment, the tendency of the orientation state of the filler in the resin molded product can be easily analyzed with a high accuracy, and consequently, it is possible to easily predict the physical properties of the resin molded product.

In addition, if needed, for example, in a case where a site that needs to be measured has been already clear, a portion of the resin molded product is cut out as necessary from the resin molded product that is a subject from which a slice image is acquired, and a resin test piece for acquiring a slice image is produced. If not needed, the operation of cutting out a test piece from the resin molded product is not performed, and the entire resin molded product may be used as a resin test piece.

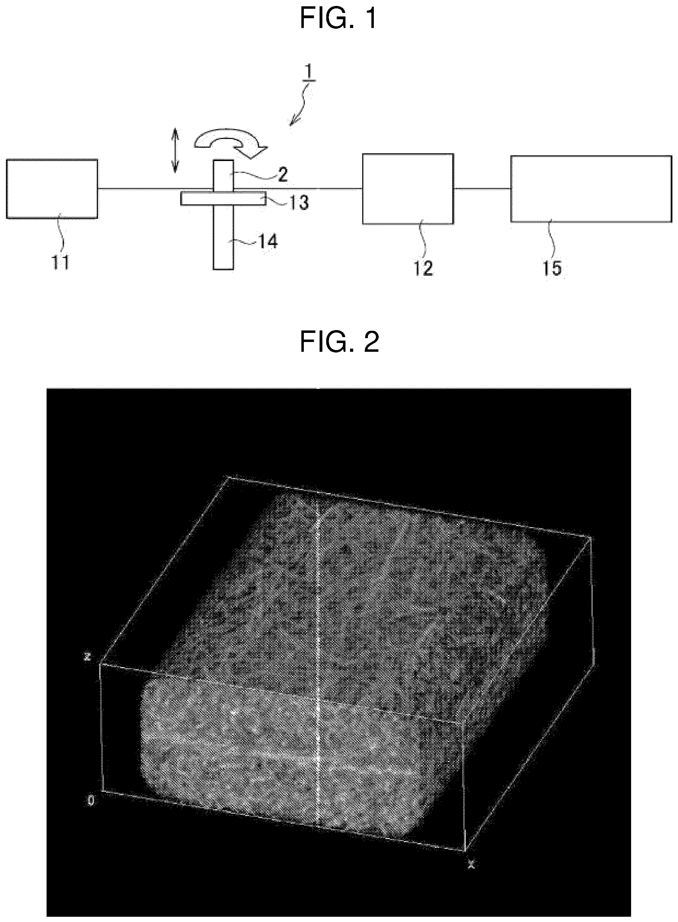

An acquisition method of the slice image is not particularly limited, and the slice image can be acquired using an X-ray CT device 1 as shown in Fig. 1. The X-ray CT device 1 includes an X-ray irradiation portion 11 for irradiating a resin test piece 2 with an X-ray, an X-ray detection portion 12 that detects an X-ray that has penetrated the resin test piece 2 as projection data, a sample stage 13 that holds the resin test piece 2, a rotation driving portion 14 for causing a vertical movement (a movement in an arrow direction in Fig. 1) and a rotation movement (a movement in a white arrow direction in Fig. 1) of the sample stage 13, and an image processing portion 15 that reconstructs the projection data in a plurality of angular directions as a slice image.

The X-ray irradiation portion 11 is a portion for irradiating the resin test piece 2 with an X-ray. The X-ray irradiation portion is not particularly limited as long as the X-ray irradiation portion is capable of irradiation with an X-ray, and it is possible to use a well-known conventional X-ray irradiation device. Examples thereof include X-ray tubes and the like. In the X-ray irradiation portion 11, it is possible to adjust the irradiation conditions of the X-ray that is used to irradiate the resin test piece 2. Examples of the irradiation conditions of the X-ray include the tube current, the X-ray irradiation time, and the like. In the analysis method of the present embodiment, the irradiation conditions of the X-ray are not particularly limited and can be changed as appropriate depending on the shape of the resin test piece, which is a subject, the kind of a resin being contained, or the like.

The X-ray detection portion 12 is a portion that converts an X-ray that has penetrated the resin test piece 2 into an electrical signal and then detects the X-ray as projection data. The X-ray detection portion 12 is disposed to face the X-ray irradiation portion 11 across the resin test piece 2.

The sample stage 13 is a portion for holding the resin test piece 2 so that the resin test piece 2 is irradiated with the X-ray. The sample stage 13 is disposed between the X-ray irradiation portion 11 and the X-ray detection portion 12.

The rotation driving portion 14 is a portion for causing the vertical movement and the rotation movement of the sample stage 13 to irradiate the resin test piece 2 with the X-rays in the plurality of angular directions. The rotation driving portion 14 is connected to the sample stage 13. The rotation driving portion 14 makes it possible to irradiate a variety of positions in the resin test piece 2 with the X-rays in a plurality of directions. As a result, it is possible to obtain projection data regarding each of the X-rays that have penetrated the resin test piece 2 at a variety of angles.

The image processing portion 15 is a portion that reconstructs the projection data in the plurality of angular directions as a slice image. The image processing portion 15 is connected to the X-ray detection portion 12. The projection data detected by the X-ray detection portion 12 is sent to the image processing portion 15, and a slice image can be obtained by performing well-known conventional image processing. Examples of a well-known conventional image processing method include methods in which one-dimensional Fourier transform is performed on the projection data in each direction, these are synthesized to produce a two-dimensional Fourier transform image, and inverse Fourier transform is performed thereon to obtain a reconstructed image.

The slice image obtained by the above-described method is slice images at a predetermined interval in a predetermined direction in the resin molded product. "A predetermined interval" refers to a range where shading is averaged at the time of obtaining the slice image. The interval of the slice image is not particularly limited and can be changed as appropriate depending on a measurement subject or the like; however, in order to appropriately analyze the orientation state of the filler in the resin molded product containing a fibrous filler, the interval of the slice image is preferably the average diameter of the filler or less or 20 $\mu$m or less in a case where the average diameter is not clear. In addition, "a predetermined direction" is a direction perpendicular to the image surface of the slice image, and the predetermined direction can be set to a desired direction.

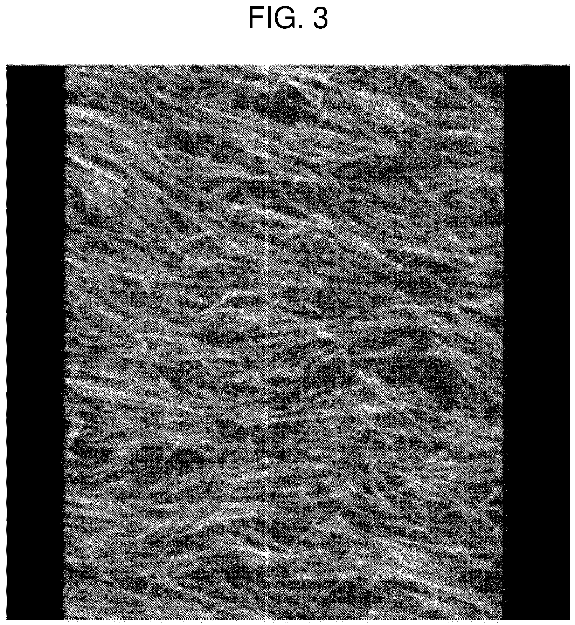

One example of the slice image that is obtained as described above is shown in Figs. 2 and 3. In Figs. 2 and 3, black and white images are shown. Fig. 2 is slice images of the entire test piece, and Fig. 3 is one slice image taken out from the slice images. A black part is a part where the X-ray easily penetrates the resin molded product, and a white part is a part where the X-ray does not easily penetrate the resin molded product. In the slice image, the resin part and the filler part are included. Normally, the X-ray easily penetrates the resin part compared with the filler part. Therefore, in Fig. 3, the black part tends to represent the resin, and the white part tends to represent the filler. As described below, the slice image also includes a noise pattern, and it is thus not possible to simply say that a black part is the resin part and a white part is the filler part.

Since the X-ray absorption rate differs in the resin part and in the filler part, a shaded image is obtained. Furthermore, in the case of obtaining a slice image of the resin test piece 2 composed of a plurality of materials having different X-ray absorption rates as described above, the X-ray absorption rate changes discontinuously at the boundary between the resin part and the filler part. Therefore, in the projection data that is obtained with the X-ray detection portion 12 as well, a discontinuous (abrupt) change appears. As a result, in a one-dimensional Fourier transform image thereof, a high-frequency component resulting from the discontinuous change significantly appears. Due to a numerical calculation error resulting from this high-frequency component, in the reconstructed image that is obtained from the image processing portion 15, a virtual image that is also referred to as artifact (noise pattern) appears.

This noise pattern is also included in the slice image. This noise pattern acts as a huge obstacle in analyzing the orientation state of the filler using the slice image by a conventional method. This is because the conventional method is a method in which the orientation state of the filler is analyzed one by one. Therefore, in a method of Patent Literature 1, the threshold is set with the range of the brightness of an image, the image is binarized and divided into two regions of a resin portion and a filler portion, and a power spectrum is then obtained.

As described above, an X-ray CT image is an image as shown in Fig. 3, and a white part, a black part, and a gray part are included. In the method of Patent Literature 1, each pixel is binarized to be white in a case where the image density of the pixel is equal to or more than an appropriately-set image density threshold and to be black in a case where the image density of the pixel is less than the image density threshold.

However, in a case where the gray part is made to belong to the resin portion or the filler part, it is necessary to set a threshold, but there is a case where the resin portion is different from the actual volume fraction depending on the threshold. In addition, the clarity of the image or a noise processing method by image processing may depend on the operator's subjectivity. As a result, the resin portion is different from the actual volume fraction, and it is assumed that the calculation accuracy of the degree of orientation or the orientation angle is adversely affected.

Therefore, in the present embodiment, as described below, a power spectrum image is acquired, and the orientation state of the filler is analyzed based on the power spectrum image.

[Power Spectrum Image Acquisition Step]

The power spectrum image acquisition step is a step of acquiring a power spectrum image by selecting, from the slice image acquired in the slice image acquisition step, one or more slice images and performing Fourier transform on the selected slice images.

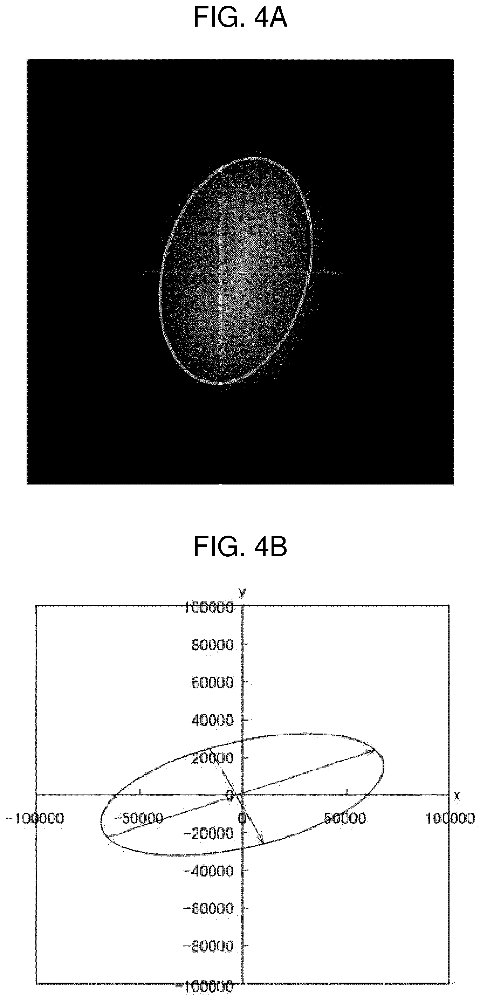

One example of the power spectrum image is shown in Fig. 4(a). The power spectrum image shown in Fig. 4(a) is a power spectrum obtained by performing Fourier transform on the two-dimensional image shown in Fig. 3.

[Orientation State Analysis Step]

The orientation state analysis step is a step of analyzing and digitalizing the orientation state of the filler in the power spectrum image based on the power spectrum image acquired in the power spectrum image acquisition step. According to the analysis method of the present embodiment, since the tendency of the orientation state is analyzed for each two-dimensional image, it is possible to accurately capture the tendency of the orientation state in the entire analysis range with an extremely favorable resolution of the length of one pixel of an X-ray CT. Particularly, in the thickness direction, for example, the resolution has been 10 images per millimeter and the thickness of one image has been also inaccurate in the related art, whereas the resolution significantly improves to be 100 images per millimeter in the present embodiment.

In the orientation state analysis step, in order to digitalize the orientation state of the filler, a two-dimensional tensor T indicated by the following mathematical formula 4 is obtained from the brightness of the pixel at any position in the power spectrum image displayed in a gray scale shown in Fig. 4(a) using the following mathematical formula 1, the following mathematical formula 2, and the following mathematical formula 3.

[Formula 3]

$$XX = \iint x^2 \left| (\sqrt{x^2+y^2})F(x,y) \right|^2 dx\, dy \quad \cdots \text{Mathematical formula 1}$$

$$YY = \iint y^2 \left| (\sqrt{x^2+y^2})F(x,y) \right|^2 dx\, dy \quad \cdots \text{Mathematical formula 2}$$

$$XY = \iint xy \left| (\sqrt{x^2+y^2})F(x,y) \right|^2 dx\, dy \quad \cdots \text{Mathematical formula 3}$$

$$T = \begin{bmatrix} XX & XY \\ XY & YY \end{bmatrix} \quad \cdots \text{Mathematical formula 4}$$

[In the mathematical formulae 1 to 4, F(x, y) indicates the density of a pixel at an X position and a Y position in the image, and x and y indicate the positions of the pixel in the horizontal direction and the vertical direction, respectively].

An eigenvector and eigenvalues a and b are obtained from each component value of the obtained two-dimensional tensor T. The eigenvector and the eigenvalues a and b can be easily calculated/implemented by a Jacobi method, a programming language, or a numerical calculation library such as Python as a calculation method. In addition, a and b in a mathematical formula 5, which will be described below, can be obtained by creating a program.

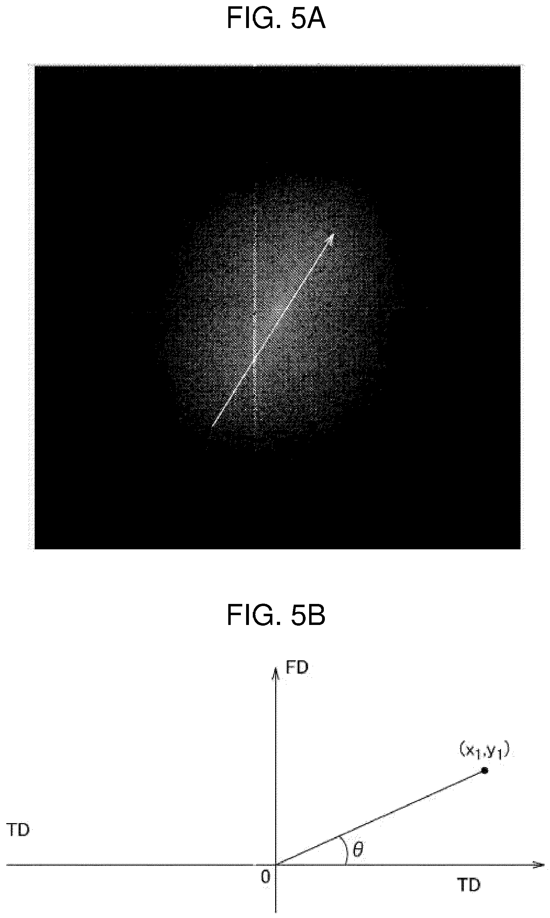

One example of a method for deriving the orientation angle of the filler will be described with reference to Fig. 5. Fig. 5(a) shows a power spectrum image, and Fig. 5(b) shows coordinates for describing the method for deriving the orientation angle. As shown in Fig. 5(b), with the Y direction of the image being defined as a flow direction (FD), in the case of near 90°, the orientation state is in the flow direction (FD), and in the case of 0° or 180°, the orientation state is in the flow transverse direction (TD). In the combination of the obtained eigenvector and eigenvalues, a vector having high eigenvalues becomes a principal vector, and a direction that the principal vector indicates is calculated from each component of the vector and defined as the orientation angle. The angle can be easily calculated from each component value V1x or V1y of the vector with Excel or an Atan2 function, such as Visual C#. Fig. 4(a) and Fig. 5(a) show the same power spectrum image, but are different from each other in terms of the fact that the orientation state is indicated by an ellipse in Fig. 4(a) and by an arrow in Fig. 5(a), respectively.

Next, one example of a method for deriving the degree of orientation of the filler will be described. The degree of orientation can be expressed by the ratio of the major axis to the minor axis of the elliptically distributed brightness as the degree of relative orientation. For example, the power spectrum image shown in Fig. 4(a) is captured as an ellipse, and the ellipse is expressed in coordinates as shown in Fig. 4(b). In addition, in a case where the major axis of the ellipse shown in Fig. 4(b) is a, and the minor axis is b, the degree of orientation becomes the following mathematical formula 5.

$$\text{degree of relative orientation} = a/b \cdots \text{Mathematical Formula 5}$$

Since the threshold of the brightness that determines the elliptical region as shown in Fig. 4(b) from the power spectrum image is not uniquely determined, there are variations in the numerical values of a and b, and consequently, the degree of orientation is not constant. However, in the present embodiment, as described above, a and b can be obtained from a calculation program. Therefore, the numerical values of a and b are uniquely determined, and a constant degree of orientation can be calculated.

The major axis a becomes an eigenvalue of the principal vector, and the minor axis b becomes an eigenvalue in a direction perpendicular to the principal vector. In addition, the degree of orientation may also be expressed by the eigenvalues or the components of the two-dimensional tensor T. A method for deriving the orientation function is not particularly limited, and a well-known conventional method can be used.

Only from the distributions of the degree of orientation and the orientation angle, the correlation with the physical property values, such as the elastic modulus, strength, or the like in the flow direction and in the flow transverse direction cannot be obtained. Therefore, an X-direction component intensity DX indicated by a mathematical formula 6 and a Y-direction component intensity DY indicated by a mathematical formula 7 are obtained using the components XX and YY of the two-dimensional tensor T calculated from each image by the mathematical formula 4. In addition, the average value thereof in the thickness direction is obtained, whereby the orientation intensity in each direction that the image shows can be obtained.

[Formula 4]

$$DX = \frac{XX}{XX+YY} \quad \cdots \text{Mathematical formula 6}$$

$$DY = \frac{YY}{XX+YY} \quad \cdots \text{Mathematical formula 7}$$

As described above, in the analysis method of the present embodiment, it is possible to skip the binarization processing of the X-ray CT image, analysis can be made within a short period of time as much. In addition, the setting of a threshold and the setting of a threshold of brightness that determines the elliptical region, which have been difficult to set in binarization, become unnecessary, and consequently, it is possible to suppress a variation in the calculation results of the orientation angle and the degree of orientation.

[Examples]

Hereinafter, the present embodiment will be more specifically described using Examples, but the present embodiment is not limited to the following Examples.

[Example 1]

(Slice Image Acquisition Step)

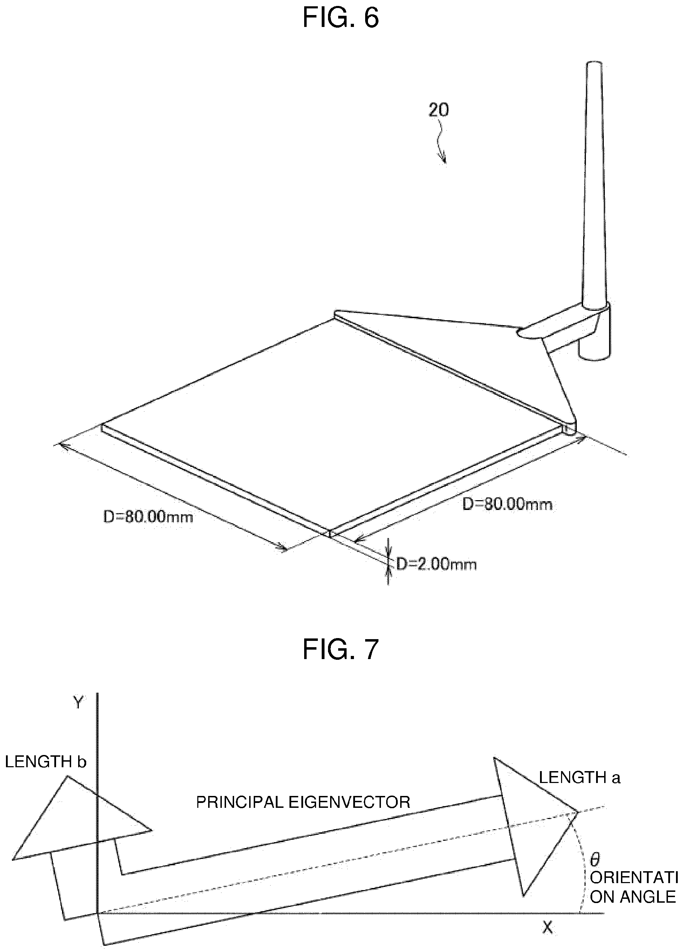

The shape of a resin molded product used in the example was a flat plate 20 as shown in Fig. 6, and four flat plates having thickness of 1 mm, 2 mm, 3 mm, and 4 mm were used. These resin molded products were produced by injection molding. The shape of the resin molded product and the molding conditions at the time of the injection molding are as described below. Fig. 6 shows the flat plate having a thickness of 2.00 mm.

Shape: 80.00 mm in length, 80.00 mm in width, 1.00, 2.00, 3.00, or 4.00 mm in thickness
Resin: Polybutylene terephthalate resin containing 15 mass% of a glass fiber
Mold temperature: 60°C
Resin temperature: 260°C
Filling rate: 17.3 $cm^3$/s
Packing Pressure: 49 MPa, 5 sec
Cooling time: 7 sec

Next, a resin test piece cut out to 12.5 mm in width and 20 mm in length was produced from each of the above-described resin molded products, and slice images were acquired. As an image capture device, a commercially available X-ray CT device (manufactured by Comscantecno Co., Ltd., ScanXmate-D090SS270) was used. The image capture conditions are as described below. Among the obtained slice images, the slice image of the flat plate having a thickness of 2 mm is shown in Fig. 3.

Voltage: 50 kV
Tube current: 150 μA
Pixel size: 10.6 μm

(Power Spectrum Image Acquisition Step)

A power spectrum image was produced by continuously performing Fourier transform on each image using a program manufactured by Polyplastics Co., Ltd. The produced power spectrum image is shown in Fig. 4.

(Orientation State Analysis Step)

A two-dimensional tensor T indicated by the mathematical formula 4 was calculated from the power spectrum of each of the power spectrum images using the mathematical formula 1, the mathematical formula 2, and the mathematical formula 3 described above. The component with the largest value among the obtained XX, YY, and XY was regarded as one, and the ratio of each component was obtained. As an example, the individual components of the two-dimensional tensor T were XX = 0.32468, YY = 1, and XY = -0.14789.

The X-direction component intensity DX was 0.245, and the Y-direction component intensity DY was 0.755.

Eigenvalue decomposition was performed from the obtained two-dimensional tensor T, and eigenvalues and eigenvectors corresponding thereto were obtained. At the same time, the eigenvalues (a, b) and the degree of relative orientation a/b by the above-described mathematical formula 5 were obtained. Examples of the angle, the degree of relative orientation, the eigenvalues, and the eigenvector (principal eigenvector) in the image shown in Fig. 5 are shown in Table 1 and Fig. 7.

[Table 1]

| Angle (°) | Degree of relative orientation | Eigenvalue | Eigenvalue | Principal eigenvector | Principal eigenvector |
|---|---|---|---|---|---|
| | a/b | (Principal) a | (Perpendicular) b | X coordinate | Y coordinate |
| 11.827 | 3.51 | 1.031 | 0.294 | -3.435 | -0.719 |

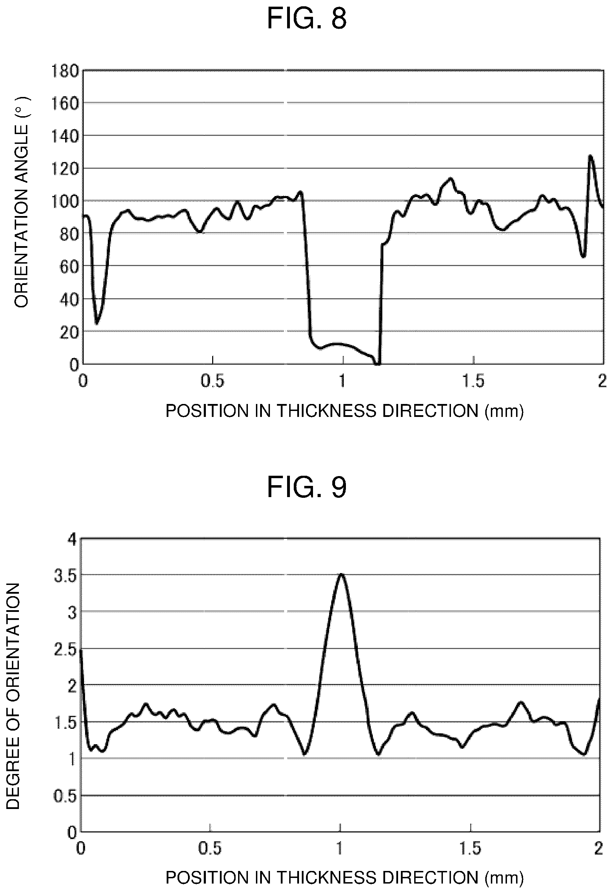

The lamination direction of pixels was regarded as the thickness direction, and the distributions of the orientation angles and the degrees of orientation were obtained from the eigenvalues and the eigenvector. The orientation angles and the degrees of orientation at positions in the thickness direction are shown in Figs. 8 and 9.

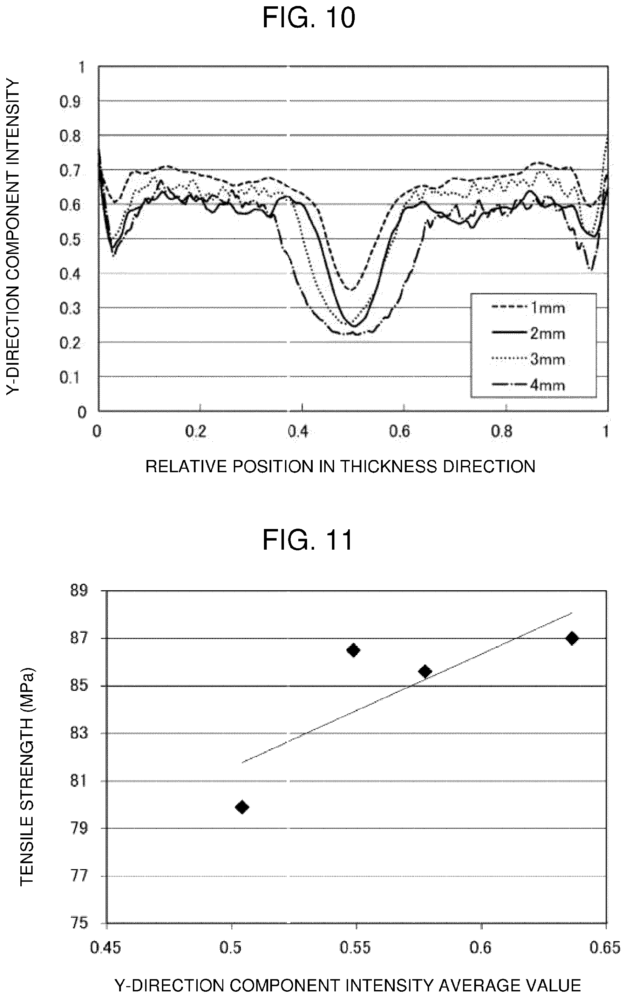

In addition, the Y-direction component intensity DY corresponding to the flow direction was obtained from the obtained two-dimensional tensor T, and a distribution at each thickness was obtained. The Y-direction component intensity distributions relative to the relative positions in the thickness direction are shown in Fig. 10. In Fig. 10, the horizontal axis indicates the relative positions in the thickness direction, 0 indicates the surface layer, 0.5 indicates the center, and 1 indicates the surface layer on the opposite side. The vertical axis indicates the relative values of the Y-direction component intensity. In addition, in Fig. 10, the dashed line is a graph of the flat plate having a thickness of 1 mm, the solid line is a graph of the flat plate having a thickness of 2 mm, the dotted line is a graph of the flat plate having a thickness of 3 mm, and the dash-dotted line is a graph of the test piece having a thickness of 4 mm.

In addition, the average value of the obtained Y-direction component intensity distributions was obtained regarding each thickness and compared with the tensile strength of the test piece. A correlation between the average value of the Y-direction component intensity distribution and the tensile strength is shown in Fig. 11.

A favorable correlation was shown between the Y-direction component intensity average value and the tensile strength. From this, the influence of the filler orientation on material physical properties is found, and the analysis of elastic modulus or strength makes material design or product design easy.

[Reference Example 1]

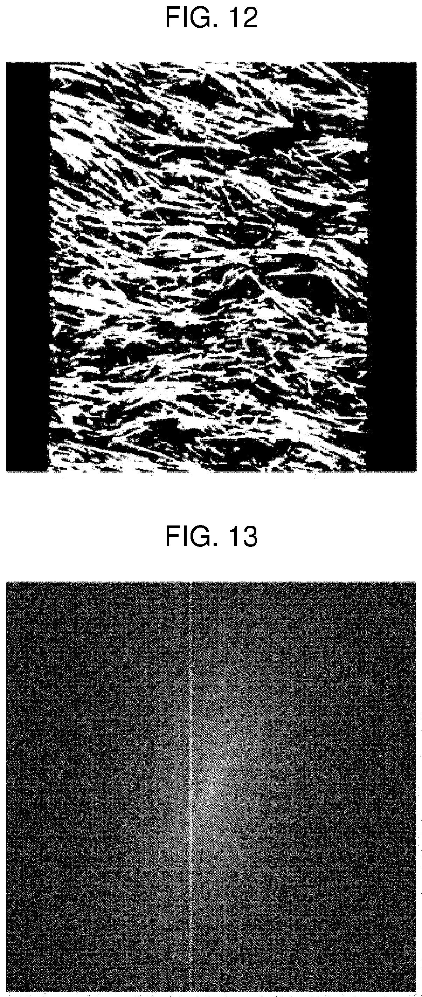

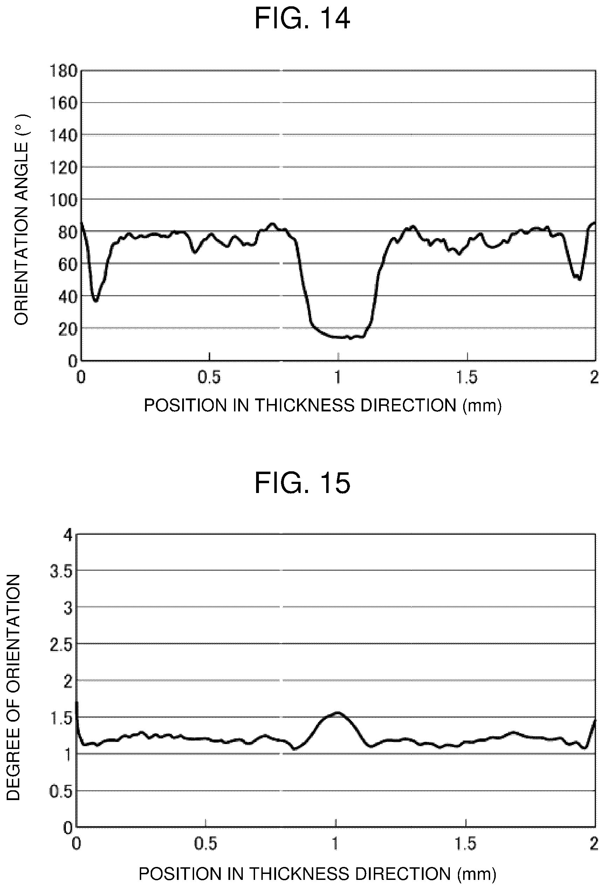

Analysis was performed in the same manner as in Example 1 except that binarization processing was performed before the power spectrum image acquisition step. For the binarization processing, image processing software ImageJ (developed by Wayne Rashand) was used. A binarized image is shown in Fig. 12, a power spectrum image after Fourier transform is shown in Fig. 13, an orientation angle distribution at positions in the thickness direction is shown in Fig. 14, and the degree of orientation is shown in Fig. 15. In the case of Reference Example 1, the degree of orientation was close to one, and the orientation was almost random in the majority of the range of the analyzed image. In contrast, in the case of Example 1 (refer to Figs. 8 and 9), the degree of orientation is high, and the orientation state in the product center part shown in Figs. 2 and 3 is more accurately reproduced. It was confirmed that according to the analysis method of the present embodiment, the tendency of the orientation state of the filler can be extremely accurately analyzed. Furthermore, the binarization processing is not required, and the analysis time also thus becomes a short time. Specifically, in Example 1 where binarization processing was not performed, it was possible to shorten the analysis time by approximately 30 minutes compared with that in Reference Example 1 where binarization processing was performed.

[Reference Signs List]

    2 Resin test piece
    11 X-ray irradiation portion
    12 X-ray detection portion
    13 Sample stage
    14 Rotation driving portion
    15 Image processing portion
    20 Flat plate

**Claims**

1. A method for analyzing an orientation state of a filler in a resin molded product, the method including analyzing the orientation state for each two-dimensional image, the method comprising:

a slice image acquisition step of acquiring one or more slice images in a predetermined direction regarding at least a part of a resin molded product obtained by molding a resin composition containing a filler in a predetermined proportion;

a power spectrum image acquisition step of selecting, from the acquired one or more slice images, one or more slice images and performing Fourier transform on each of the selected slice images, thereby acquiring a corresponding power spectrum image; and

an orientation state analysis step of analyzing and digitalizing an orientation state of the filler in the power spectrum image based on the power spectrum image,

wherein, in the orientation state analysis step, a two-dimensional tensor T indicated by the following mathematical formula 4 is obtained from brightness of a pixel at any position in the power spectrum image using the following mathematical formula 1, the following mathematical formula 2, and the following mathematical formula 3;

[Formula 1]

$$XX = \iint x^2 \left| (\sqrt{x^2+y^2})F(x,y) \right|^2 dx\,dy \quad \text{Mathematical formula 1}$$

$$YY = \iint y^2 \left| (\sqrt{x^2+y^2})F(x,y) \right|^2 dx\,dy \quad \text{Mathematical formula 2}$$

$$XY = \iint xy \left| (\sqrt{x^2+y^2})F(x,y) \right|^2 dx\,dy \quad \text{Mathematical formula 3}$$

$$T = \begin{bmatrix} XX & XY \\ XY & YY \end{bmatrix} \quad \text{Mathematical formula 4}$$

wherein, in the mathematical formulae 1 to 4, F(x, y) indicates a brightness of a pixel at an X position and a Y position in the image, and x and y indicate positions of the pixel in a horizontal direction and a vertical direction, respectively;

wherein, in the orientation state analysis step, eigenvalues a and b and an eigenvector are obtained from the two-dimensional tensor T, a degree of orientation is obtained from the eigenvalues a and b, and an orientation angle is obtained from the eigenvector;

wherein, in the orientation state analysis step, a degree of relative orientation indicated by the following mathematical formula 5 is obtained from two components of the eigenvalues a and b;

degree of relative orientation = a/b ⋯ Mathematical Formula 5 wherein, in the mathematical formula 5, the eigenvalues a and b satisfy a ≥ b.

2. The method for analyzing an orientation state of a filler in a resin molded product according to claim 1, wherein the filler is glass fibers.

3. The method for analyzing an orientation state of a filler in a resin molded product according to claim 1 or 2, wherein the filler is present in an amount of about 15 wt% based on the total mass of the resin molded product.

4. The method for analyzing an orientation state of a filler in a resin molded product according to any one of claims 1 to 3, wherein an X-direction component intensity DX indicated by the following mathematical formula 6 and a Y-direction component intensity DY indicated by the following mathematical formula 7, for which the components XX and YY in the mathematical formula 4 are used, are obtained.

[Formula 2]

$$DX = \frac{XX}{XX+YY} \quad \cdots \qquad \text{Mathematical formula 6}$$

$$DY = \frac{YY}{XX+YY} \quad \cdots \qquad \text{Mathematical formula 7}$$

**Patentansprüche**

1.  Verfahren zur Analyse eines Orientierungszustands eines Füllstoffs in einem Kunststoffformteil, wobei das Verfahren die Analyse des Orientierungszustands für jedes zweidimensionalen Bildes umfasst, wobei das Verfahren umfasst:

    einen Schritt zum Erfassen von Schnittbildern, bei dem ein oder mehrere Schnittbilder in einer vorbestimmten Richtung in Bezug auf mindestens einen Teil eines Kunststoffformteils erfasst werden, das durch Formen einer Kunststoffzusammensetzung erhalten wurde, die einen Füllstoff in einem vorbestimmten Anteil enthält;
    einen Leistungsspektrum-Bildaufnahmeschritt, bei dem aus den aufgenommenen einem oder mehreren Schnittbildern ein oder mehrere Schnittbilder ausgewählt werden und an jedem der ausgewählten Schnittbilder eine Fourier-Transformation durchgeführt wird, wodurch ein entsprechendes Leistungsspektrum-Bild aufgenommen wird; und
    einen Orientierungszustands-Analyseschritt zum Analysieren und Digitalisieren eines Orientierungszustands des Füllstoffs in dem Leistungsspektrum-Bild auf der Grundlage des Leistungsspektrum-Bildes,
    wobei im Schritt zur Analyse des Orientierungszustands ein zweidimensionaler Tensor T, der durch die folgende mathematische Formel 4 angegeben wird, aus der Helligkeit eines Pixels an einer beliebigen Position im Leistungsspektrum-Bild unter Verwendung der folgenden mathematischen Formel 1, der folgenden mathematischen Formel 2 und der folgenden mathematischen Formel 3 erhalten wird;

    [Formel 1]

    $$XX = \iint x^2 \left| \left(\sqrt{x^2+y^2}\right)F(x,y) \right|^2 dx\, dy \quad \text{Mathematische Formel 1}$$

    $$YY = \iint y^2 \left| \left(\sqrt{x^2+y^2}\right)F(x,y) \right|^2 dx\, dy \quad \text{Mathematische Formel 2}$$

    $$XY = \iint xy \left| \left(\sqrt{x^2+y^2}\right)F(x,y) \right|^2 dx\, dy \quad \text{Mathematische Formel 3}$$

    $$T = \begin{bmatrix} XX & XY \\ XY & YY \end{bmatrix} \quad \text{Mathematische Formel 4}$$

    wobei in den mathematischen Formeln 1 bis 4 F(x, y) die Helligkeit eines Pixels an einer X-Position und einer Y-Position im Bild angibt und x und y die Positionen des Pixels in horizontaler bzw. vertikaler Richtung angeben;
    wobei im Schritt der Orientierungszustandsanalyse Eigenwerte a und b sowie ein Eigenvektor aus dem zweidimensionalen Tensor T ermittelt werden, ein Orientierungsgrad aus den Eigenwerten a und b ermittelt wird und ein Orientierungswinkel aus dem Eigenvektor ermittelt wird;
wobei im Schritt der Orientierungszustandsanalyse ein Grad der relativen Orientierung, der durch die folgende mathematische Formel 5 angegeben wird, aus zwei Komponenten der Eigenwerte a und b ermittelt wird;
Relativer Orientierungsgrad = a/b $\cdots$ Mathematische Formel 5 wobei in der mathematischen Formel 5 die Eigenwerte a und b die Bedingung a$\geq$ b erfüllen.

2. Verfahren zur Analyse eines Orientierungszustands eines Füllstoffs in einem Kunststoffformteil gemäß Anspruch 1, wobei der Füllstoff Glasfasern sind.

3. Verfahren zur Analyse eines Orientierungszustands eines Füllstoffs in einem Kunststoffformteil gemäß Anspruch 1 oder 2, wobei der Füllstoff in einer Menge von etwa 15 Gew.-%, bezogen auf die Gesamtmasse des Kunststoffformteils, vorhanden ist.

4. Verfahren zur Analyse eines Orientierungszustands eines Füllstoffs in einem Kunststoffformteil gemäß einem der Ansprüche 1 bis 3, wobei eine durch die folgende mathematische Formel 6 angegebene Intensität der X-Richtungskomponente DX und eine durch die folgende mathematische Formel 7 angegebene Intensität der Y-Richtungskomponente DY, für die die Komponenten XX und YY in der mathematischen Formel 4 verwendet werden, ermittelt werden.

[Formel 2]

$$DX = \frac{XX}{XX+YY} \quad \cdots \quad \text{Mathematische Formel 6}$$

$$DY = \frac{YY}{XX+YY} \quad \cdots \quad \text{Mathematische Formel 7}$$

**Revendications**

1. Procédé d'analyse d'un état d'orientation d'une charge dans un produit moulé en résine, le procédé comportant l'analyse de l'état d'orientation pour chaque image bidimensionnelle, le procédé comprenant :

   une étape d'acquisition d'image de tranche consistant à acquérir une ou plusieurs images de tranche dans une direction prédéterminée concernant au moins une partie d'un produit moulé en résine obtenu par moulage d'une composition de résine contenant une charge selon une proportion prédéterminée ;
   une étape d'acquisition d'image de spectre de puissance consistant à sélectionner, parmi les une ou plusieurs images de tranche acquises, une ou plusieurs images de tranche et à effectuer une transformée de Fourier sur chacune des images de tranche sélectionnées, en acquérant ainsi une image de spectre de puissance correspondante ; et
   une étape d'analyse d'état d'orientation consistant à analyser et numériser un état d'orientation de la charge dans l'image de spectre de puissance sur la base de l'image de spectre de puissance,
   dans lequel, lors de l'étape d'analyse d'état d'orientation, un tenseur bidimensionnel T indiqué par la formule mathématique 4 suivante est obtenu à partir d'une luminosité d'un pixel à toute position dans l'image de spectre de puissance en utilisant la formule mathématique 1 suivante, la formule mathématique 2 suivante et la formule mathématique 3 suivante ;

[Formule 1]

$$XX = \iint x^2 \left|\left(\sqrt{x^2+y^2}\right)F(x,y)\right|^2 dx\, dy \qquad \text{Formule mathématique 1}$$

$$YY = \iint y^2 \left|\left(\sqrt{x^2+y^2}\right)F(x,y)\right|^2 dx\, dy \qquad \text{Formule mathématique 2}$$

$$XY = \iint xy \left|\left(\sqrt{x^2+y^2}\right)F(x,y)\right|^2 dx\, dy \qquad \text{Formule mathématique 3}$$

$$T = \begin{bmatrix} XX & YY \\ XX & YY \end{bmatrix} \quad \text{Formule mathématique 4}$$

dans lequel, dans les formules mathématiques 1 à 4, F(x, y) indique une luminosité d'un pixel à une position X et une position Y dans l'image, et x et y indiquent des positions du pixel dans une direction horizontale et une direction verticale, respectivement ;

dans lequel, lors de l'étape d'analyse d'état d'orientation, des valeurs propres a et b et un vecteur propre sont obtenus à partir du tenseur bidimensionnel T, un degré d'orientation est obtenu à partir des valeurs propres a et b, et un angle d'orientation est obtenu à partir du vecteur propre ;

dans lequel, lors de l'étape d'analyse d'état d'orientation, un degré d'orientation relative indiqué par la formule mathématique 5 suivante est obtenu à partir de deux composantes des valeurs propres a et b ;

degré d'orientation relative = a/b ⋯ Formule mathématique 5

dans lequel, dans la formule mathématique 5, les valeurs propres a et b satisfont à a ≥ b.

**2.** Procédé d'analyse d'un état d'orientation d'une charge dans un produit moulé en résine selon la revendication 1, dans lequel la charge consiste en des fibres de verre.

**3.** Procédé d'analyse d'un état d'orientation d'une charge dans un produit moulé en résine selon la revendication 1 ou 2, dans lequel la charge est présente selon une quantité d'environ 15 % en poids sur la base de la masse totale du produit moulé en résine.

**4.** Procédé d'analyse d'un état d'orientation d'une charge dans un produit moulé en résine selon l'une des revendications 1 à 3, dans lequel il est obtenu une intensité de composante DX dans la direction X indiquée par la formule mathématique 6 suivante et une intensité de composante DY dans la direction Y indiquée par la formule mathématique 7 suivante, pour lesquelles les composantes XX et YY dans la formule mathématique 4 sont utilisées.

[Formule 2]

$$DX = \frac{XX}{XX+YY} \quad \cdots \quad \text{Formule mathématique 6}$$

$$DY = \frac{XX}{XX+YY} \quad \cdots \quad \text{Formule mathématique 7}$$

FIG. 1

FIG. 2

# FIG. 3

# FIG. 4A

# FIG. 4B

# FIG. 5A

# FIG. 5B

FIG. 6

20

D=80.00mm

D=80.00mm

D=2.00mm

FIG. 7

Y

LENGTH b

LENGTH a

PRINCIPAL EIGENVECTOR

$\theta$
ORIENTATI
ON ANGLE

X

## FIG. 8

## FIG. 9

## FIG. 10

## FIG. 11

## FIG. 12

## FIG. 13

## FIG. 14

ORIENTATION ANGLE (°) vs POSITION IN THICKNESS DIRECTION (mm)

## FIG. 15

DEGREE OF ORIENTATION vs POSITION IN THICKNESS DIRECTION (mm)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012002547 A

- JP 5844921 B

**Non-patent literature cited in the description**

- **RANDY S. BAY et al.** Fiber orientation in injection-molded composites: A comparison of theory and experiment. *POLYMER COMPOSITES*, August 1992, vol. 13 (4)

- **SHENG JIANG et al.** Three-dimensional fabric orientation visualisation technique for distributed fractures using X-ray computed tomography. *INTERNATIONAL JOURNAL OF ROCK MECHANICS AND MINING SCIENCES*, 01 June 2021, vol. 142, ISSN 1365-1609, 1-17